# EUROPÄISCHE PATENTSCHRIFT

(11) **EP 2 699 414 B1**
(45) Veröffentlichungstag und Bekanntmachung des Hinweises auf die Patenterteilung: **14.04.2021**
(21) Anmeldenummer: 12720098.8
(22) Anmeldetag: 17.04.2012
(51) Int. Cl.: F16L 53/38, B32B 1/08, H05B 3/58, B32B 27/30, B32B 27/08, B32B 27/34, B32B 5/18

(54) **MEHRLAGIGE ELEKTRISCH BEHEIZBARE MEDIENLEITUNG**
MULTIPLE-LAYER ELECTRICALLY HEATABLE MEDIUM LINE
CONDUITE DE MILIEUX MULTICOUCHE POUVANT ÊTRE CHAUFFÉE ÉLECTRIQUEMENT

(30) Priorität: 19.04.2011 DE 102011018243
(43) Veröffentlichungstag der Anmeldung: 26.02.2014
(73) Patentinhaber: Voss Automotive GmbH, 51688 Wipperfürth (DE)
(72) Erfinder: WESTMEIER, Jörg, 40468 Düsseldorf (DE); SCHWARZKOPF, Otfried, 51515 Kürten (DE); SCHÜLER, Thomas, 51643 Gummersbach (DE)
(74) Vertreter: Rebbereh, Cornelia
(86) Internationale Anmeldenummer: PCT/EP2012/001663
(87) Internationale Veröffentlichungsnummer: WO 2012/143121

(56) Entgegenhaltungen:
- EP-A2- 1 329 660
- WO-A1-2006/090182
- WO-A1-2009/052849
- WO-A1-2010/052008
- WO-A1-2011/015362
- WO-A2-2012/065710
- DE-A1-102006 051 413
- DE-C1- 3 900 821
- DE-U1-202005 004 602

## Beschreibung

Die Erfindung betrifft eine mehrlagige elektrisch beheizbare Medienleitung mit einer medienresistenten Innenschicht, einer mit zumindest zwei Leitern oder Heizleitern versehenen Wärmeschicht und einer äußeren Schicht sowie ein Verfahren zum Herstellen einer solchen mehrlagigen elektrisch beheizbaren Medienleitung.

Elektrisch beheizbare Medienleitungen und Verfahren zu deren Herstellung sind im Stand der Technik bekannt. Insbesondere in Fahrzeugen sind eine Reihe von Medienleitungen vorgesehen zum Leiten von zumeist flüssigen Medien. Diese Medienleitungen drohen bei niedrigen Temperaturen einzufrieren, weswegen eine Beheizung vorgesehen wird. Verbindungseinrichtungen dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Medienleitungen mit einer wässrigen Harnstofflösung als Medium, die als NOₓ-Reaktionsadditiv für Dieselmotoren mit sogenannten SCR-Katalysatoren eingesetzt werden. Die Wärmeschicht der Medienleitung dient dem Beheizen der Medienleitung, wobei die Wärmeschicht eine elektrisch leitfähige und durch den elektrischen Widerstand wärmeerzeugende Kunststoffschicht ist und die Leiter als Kontaktpole oder elektrische Widerstandsheizleiter ausgebildet sind und hierdurch eine Erwärmung ermöglichen oder als Heizleiter einen Wärmeübertrag in die Wärmeschicht vorsehen.

Beispielsweise offenbart die WO 2010/080890 A1 eine elektrisch beheizte, flexible Flüssigkeitsleitung mit einem länglichen flexiblen Rohrkörper, der eine elektrische Widerstandsheizeinrichtung umfasst. Diese umgibt den Flüssigkeitsströmungsweg. In einer Ausführungsvariante sind Wärme erzeugende elektrische Strömungswege durch einen elektrisch leitenden Draht in dem Rohrkörper gebildet, der um den Flüssigkeitsströmungsweg herum gelegt ist, um an zahlreichen Stellen zwei elektrische Versorgungsleitungen zu kreuzen. In einer anderen Ausführungsvariante enthält der Wärme erzeugende elektrische Strömungsweg eine Schicht aus elektrisch leitfähigen Polymeren innerhalb des Rohrkörpers, den Flüssigkeitsströmungsweg umgebend. Entweder besteht der gesamte Rohrkörper aus elektrisch leitfähigen Polymeren oder die Polymerschicht ist zwischen zwei elektrisch nicht leitfähigen Schichten angeordnet. Die elektrischen Versorgungsleitungen sind über elektrische Anschlüsse an eine elektrische Energiequelle angeschlossen, wobei die elektrischen Anschlüsse an demselben Ende des Rohrkörpers, an einander gegenüberliegenden Enden oder entlang des Rohrkörpers angeordnet sind.

Die DE 20 2005 004 602 U1 offenbart eine beheizbare Flüssigkeitsleitung mit in dem Mantel der Flüssigkeitsleitung eingebetteten elektrischen Leitungen. Hierbei bildet ein flüssigkeitsdurchflossener Kunststoffschlauch eine innerste Schicht, die von einer mittleren Schicht aus einem elektrisch leitfähigen Polymer mit positiver Temperaturcharakteristik des elektrischen Widerstandes und darin eingebetteten elektrischen Leitungen umgeben ist, wobei eine äußere Schicht aus einem Isoliermaterial die Leitung auf der Außenseite umgibt. Die mittlere Schicht ist als ein thermoplastisches Polymer mit elektrisch leitfähigen Partikeln in Form einer PTC-Polymerschicht offenbart, die auf die innerste Schicht aufextrudiert ist.

Aus der EP 2 201 229 B1 ist ein Verfahren zum Herstellen eines Leitungssystems zum Leiten von Harnstoff-Wasser-Lösungen bekannt, wobei das Leistungssystem eine Fluid-Leitung aufweist, die einen mit einem Heizleiter umwickelten Abschnitt aufweist. Das Leitungssystem weist ferner in dem Abschnitt eine den Heizleiter bedeckende Ummantelung aus einem Polymermaterial auf. Bevor der Heizleiter entlang der gesamten vorgegebenen Länge um den Abschnitt gewickelt wird, wird eine Schicht aus Polymermaterial um Bereiche des Abschnitts gewickelt, um die der Heizleiter bereits gewickelt wurde, bis der Abschnitt entlang zumindest eines Teils der vorgegebenen Länge von der Schicht aus Polymermaterial umwickelt ist, um die Ummantelung zu bilden, die den Abschnitt umgibt und den Heizleiter bedeckt. Die Schicht aus Polymermaterial wird durch Extrusion erzeugt.

Aus der DE 37 30 580 C1 ist ein elektrisch beheizbarer Schlauch bekannt, bei dem Elektroden in dem Mantel des Schlauchs eingebettet sind und zwischen diesen eine homogene leitfähige Schicht angeordnet ist, die die Schlauchwand bildet. Die elektrisch leitfähige Schicht besteht aus einer Mischung aus einem Polymer-Grundmaterial und Ruß oder Graphit, die Elektroden aus einer Kupferlitze oder aus leitfähigem Kunststoff.

Die WO 2006/090182 A1 offenbart eine mehrlagige Medienleitung, bei der ein oder mehrere Leiterpaare in eine Schicht eingebettet sind und sich entlang der Medienleitung erstrecken. Die rohrförmige Medienleitung weist eine innere elektrisch nicht leitfähige Schicht auf, die über ein Extrusionsverfahren mit einer Schicht aus einem thermoplastischen Elastomer versehen ist. Letztere ist leicht elektrisch leitfähig. Die elektrischen Leiter sind in diese Schicht eingebettet. Sie sind gegeneinander elektrisch isoliert und miteinander ausschließlich durch die leicht elektrisch leitfähige Schicht verbunden.

Aus der DE 39 00 821 C1 ist eine fluidführende Schlauchleitung für ein Kraftfahrzeug bekannt, die im Wege der Koextrusion aus mehreren Kunststoffschichten aus thermoplastischem Kunststoff aufgebaut ist. Sie besteht aus einer inneren fluidführenden Schicht, einer äußeren Mechanikschicht und einer zwischen der fluidführenden Schicht und der mechanischen Schicht angeordneten Heizschicht. Die Heizschicht ihrerseits besteht aus einem thermoplastischen Kunststoff, der durch einen leitenden Füller ausreichend leitfähig eingestellt ist und zwei eingebettete metallische Leiter für die Zuführung von elektrischer Energie aufweist. Die Heizschicht weist in einer Ausführungsform einen längslaufenden Abstandsspalt auf. Im Bereich des Abstandspaltes sind die elektrischen Leiter dabei in die Heizschicht eingebettet.

Die WO 2011/015362 A1 offenbart ein beheizbares Schlauchsystem mit einem fluidführenden inneren Schlauchteil, dessen Wandung von einem elektrischen Heizleiter beheizbar ist. Der elektrische Heizleiter ist separat ausgebildet und umgibt die äußere Wandung des inneren Schlauchteils. Ferner ist der elektrische Heizleiter mittels einer separaten, den Heizleiter fest umgebenden Außenschicht nach außen wärmeisoliert. Zwischen dem inneren Schlauchteil und der Außenschicht kann ferner ein Stützgewebe angeordnet sein, in das der Heizleiter integriert ist. Der innere Schlauchteil weist einen doppelwandigen Aufbau aus einer inneren Lage aus Polyamid und einer äußeren Lage aus Polyamid mit einem zwischen diesen beiden Lagen angeordneten Verstärkungsgewebe auf. Auf dem Außenmantel des inneren Schlauchteils sitzt der zumindest eine wendeförmig ausgebildete Heizleiter, der insbesondere bei der Herstellung des beheizbaren Schlauchsystems auf den Außenmantel des inneren Schlauchteils aufgeschoben wird. Der oder die Heizleiter werden außen von dem Stützgewebe eng umgeben, das den bzw. die Heizleiter auf dem anderen Schlauchteil fixiert. Alternativ wird offenbart, dass die Heizleiter in das Stützgewebe mit eingewebt sind. Der Heizleiter bzw. die Stützgewebeschicht werden außenseitig von der thermisch isolierenden Außenschicht umgeben. Als Material für den inneren Schlauchteil wird Gummi in Form von Naturkautschuk oder ein gummiähnlicher Kunststoff angegeben.

Der vorliegenden Erfindung liegt nun die Aufgabe zugrunde, eine besser kontaktierbare mehrlagige elektrisch beheizbare Medienleitung vorzusehen sowie eine verbesserte Automatisierbarkeit der Herstellung einer mehrlagigen elektrisch beheizbaren Medienleitung zu erhalten, wobei hierdurch eine Prozessoptimierung bei der Herstellung der Medienleitung möglich sein soll.

Die Aufgabe wird bei einer mehrlagigen elektrisch beheizbaren Medienleitung nach dem Oberbegriff des Anspruchs 1 dadurch gelöst, dass die Leiter oder Heizleiter in Längsrichtung der Medienleitung gewendelt in einer radial vorbestimmten Lage innerhalb der Wärmeschicht eingebettet sind. Bei einem Verfahren zum Herstellen einer mehrlagigen elektrisch beheizbaren Medienleitung wird die Aufgabe dadurch gelöst, dass eine ein- oder mehrlagige Innenschicht gefertigt wird, zum Anordnen von Leitern oder Heizleitern in einer definierten Lage in der Wandung der Medienleitung auf die Innenschicht eine erste Lage einer Wärmeschicht aufgebracht wird, auf diese erste Lage der Wärmeschicht zumindest zwei Leiter oder Heizleiter aufgebracht werden, eine zweite Lage der Wärmeschicht aufgebracht wird, wobei die Leiter oder Heizleiter in die zweite Lage der Wärmeschicht eingebettet werden, und auf die zweite oder zumindest eine weitere Lage der Wärmeschicht eine ein- oder mehrlagige äußere Schicht aufgebracht wird oder dadurch, dass eine ein- oder mehrlagige Innenschicht gefertigt wird, auf die Innenschicht eine Wärmeschicht als ein- oder mehrlagige Schicht aufgebracht wird, die Wärmeschicht lokal bis zum teilweisen Aufschmelzen erwärmt wird oder erwärmt ist, in die aufgeschmolzene Wärmeschicht zumindest zwei Leiter oder Heizleiter in über die Längserstreckung der Medienleitung hinweg gewendelter Anordnung eingebracht werden und auf die Wärmeschicht eine ein- oder mehrlagige äußere Schicht aufgebracht wird oder dadurch, dass eine ein- oder mehrlagige Innenschicht gefertigt wird, auf der Innenschicht eine ein- oder mehrlagige Wärmeschicht aufgebracht wird, auf die Wärmeschicht eine ein- oder mehrlagige äußere Schicht aufgebracht wird, zumindest zwei Leiter oder Heizleiter erwärmt und vor Aufbringen der äußeren Schicht oder danach von der jeweiligen Außenseite der Wärme- oder äußeren Schicht her bis in eine vorbestimmte Tiefe in die Wärmeschicht eingebracht werden. Weiterbildungen der Erfindung sind in den abhängigen Ansprüchen definiert.

Dadurch wird eine mehrlagige elektrisch beheizbare Medienleitung geschaffen, bei der eine Kontaktierung zum Anschließen einer Verbindungseinrichtung zum Anschließen der Medienleitung an ein Aggregat auf einfachere Art und Weise möglich wird, da die Position der innerhalb der Wärmeschicht eingebetteten Leiter oder Heizleiter vorbestimmt und definiert ist. Unter dem Vorbestimmen der radialen Lage bzw. Position der Leiter oder Heizleiter wird ein vorab festgelegtes, überlegtes eindeutiges Anordnen der Leiter bzw. Heizleiter in einer gewünschten radialen Lage bzw. Position bezüglich der Wärmeschicht und mit einer vorab festgelegten Steigung in Bezug auf die Längsachse der Medienleitung verstanden. Nach dem Überdecken der Leiter bzw. Heizleiter mit einer Materialschicht (einer weiteren Lage der Wärmeschicht und/oder der äußeren Schicht(en)) ist die Lage bzw. Position der Leiter oder Heizleiter somit bekannt und aufgrund der Kenntnis der Fertigungsparameter eindeutig definiert und zu bestimmen, da diese beim Einbetten der Leiter oder Heizleiter vorgegeben wurde. Die Lage oder Position der Leiter oder Heizleiter ist somit nicht zufällig, wie bei den Medienleitungen des Standes der Technik, sondern durch bestimmte Parameter bei der Fertigung radial eindeutig definiert.

Durch das Vorbestimmen gerade der radialen Lage der Leiter oder Heizleiter in der Wärmeschicht liegt keine Abhängigkeit von der Toleranz der anderen Schichten der Medienleitung mehr vor, so dass eine eindeutige Position der Leiter oder Heizleiter in der Wärmeschicht gegeben ist. Es ist somit möglich, die Medienleitung als Endlosrohr zu fertigen, in der gewünschten Länge abzulängen und direkt zu kontaktieren. Die Bearbeitungszeit ist dabei kürzer als bei den bekannten Kontaktierungsverfahren. Ein Kontaktieren der elektrischen Leiter bzw. Heizleiter kann insbesondere durch Entfernen lediglich der äußeren Schicht in einem gewünschten Fenster und nachfolgendes Kontaktieren der Leiter bzw. Heizleiter erfolgen. Die äußere Schicht kann dabei tangential bezüglich der Medienleitung, in die Tiefe hinein, also radial bezüglich der Medienleitung, axial in Längsrichtung der Medienleitung oder kreisrund um die Medienleitung herum entfernt werden. Die Leiter bzw. Heizleiter können stoffschlüssig kontaktiert werden und/oder Kontakte können eingeschmolzen werden. Eine Verbindungseinrichtung oder -kontur zum Verbinden der Medienleitung mit einer weiteren Medienleitung bzw. einem Aggregat kann u.a. an das zum Konnektieren vorbereitete Ende der Medienleitung angespritzt oder die Medienleitung an ihrem Ende entsprechend mit einer fluidischen und/oder elektrischen Verbindungskontur umspritzt werden.

Zum Kontaktieren der Leiter bzw. Heizleiter wird somit lediglich ein kleines Fenster freigelegt durch Erweichen der in Richtung der Außenseite der Medienleitung über den Leitern bzw. Heizleitern liegenden Materialschicht(en) und Anlöten der entsprechenden Kabel oder Kontakte an die Leiter bzw. Heizleiter. Da die radiale und axiale Lage der Leiter bzw. Heizleiter bekannt ist, reicht es aus, lediglich ein kleines Fenster zum Kontaktieren freizulegen, das bezogen auf die Längsachse und die radiale Erstreckung der Medienleitung definiert ist. Die Toleranzen der äußeren Schichten der Medienleitung sind für das Konnektieren somit irrelevant, da die Schichten bzw. Lagen über den zu kontaktierenden Leitern oder Heizleitern entfernt werden, so dass man aufgrund der Kenntnis der Lage der Leiter oder Heizleiter weiß, an welcher Stelle die Fensterung erfolgen soll. Die Kontaktierung wird durch die Kenntnis der Lage der Leiter bzw. Heizleiter einfacher und besser als bei den bekannten Medienleitungen, da die Leiter bzw. Heizleiter nur in einem kleinen Bereich (Fenster) freigelegt werden müssen und über die restliche Erstreckung der Medienleitung hinweg in deren Wandung geschützt bleiben.

Grundsätzlich ist es möglich, die bereits mit Lot versehenen erhitzten Kontakte von der Außenseite der Medienleitung in deren Wandung hinein bis zu den Leitern bzw. Heizleitern durchzustoßen und an diese direkt anzulöten, wobei die Schichten der Wandung aufgrund der Erwärmung weich werden und den Durchtritt der Kontakte ermöglichen. Die Fenstergröße kann durch die Kenntnis der Lage der Leiter bzw. Heizleiter hierbei minimal gehalten werden, entspricht also im Wesentlichen nur dem Durchmesser der erhitzten Kontakte. Aufgrund der Fensterung anstelle des sonst üblichen Freilegens der Medienleitung über einen großen Bereich hinweg, um die Leiter bzw. Heizleiter zu kontaktieren, ist eine kurze Bearbeitungszeit bzw. eine schnelle Konnektierung eines Elektrosteckers zum Anschließen der Leiter bzw. Heizleiter an eine Strom-/Spannungsversorgung möglich.

Vorteilhaft ist zwischen der Wärmeschicht und der Innenschicht bzw. von der innersten Lage der Leiter oder Heizleiter ausgehend radial in Richtung der Innenschicht eine Sperrschicht, insbesondere eine laserundurchlässige Sperrschicht vorgesehen, die ein Aufweichen und somit Beschädigen der Innenschicht verhindert. Ferner können auch zwischen den anderen Schichten der Medienleitung Sperrschichten vorgesehen werden. Ebenso kann die Medienleitung außenseitig mit einer Sperrschicht versehen werden.

Aufgrund der definierten Lage der Leiter bzw. Heizleiter innerhalb der Wärmeschicht kann eine gezielte auch partiell intensivere Beheizung in einem vorbestimmten Bereich innerhalb bzw. entlang der Wandung der Medienleitung erfolgen, wobei die Leiter oder Heizleiter beispielsweise direkt benachbart zu der Innenschicht und/oder direkt benachbart zu der äußeren Schicht angeordnet werden können und/oder in einer oder mehreren Positionen dazwischen. Je nach Wahl der Lage und der Anzahl an Leitern bzw. Heizleitern in einem Bereich kann dort eine schnellere Erwärmung des innerhalb der Medienleitung strömenden Mediums erfolgen. Gerade bei Vorsehen mehrerer Lagen von +/--Leitern oder Heizleitern können einzelne gezielt ab- und zugeschaltet und somit die Erwärmung der Medienleitung zusätzlich gesteuert werden. Da die Wärmeschicht vorteilhaft so dünn wie möglich gehalten wird, insbesondere unter 1 mm, um die Wandungsstärke der Medienleitung gegenüber herkömmlichen Medienleitungen durch den Aufbau mit insbesondere mehreren Lagen von Leitern bzw. Heizleitern möglichst kaum zu erhöhen, können die Leiter bzw. Heizleiter über den Umfang der Medienleitungswandung verteilt bzw. versetzt zueinander angeordnet werden. Ein gezieltes Zu- und Abschalten einzelner Leiter bzw. Heizleiter ermöglicht ein gezieltes Erwärmen der Medienleitung im späteren Einbauzustand in gewünschten Bereichen.

Die Steigung der gewendelt angeordneten Leiter bzw. Heizleiter kann über die Längserstreckung der Medienleitung hinweg variieren. Es kann also eine über die Längserstreckung der Medienleitung hinweg abschnittsweise unterschiedliche bzw. variable Steigung der Leiter bzw. Heizleiter vorgesehen werden. Eine Kenntnis der axialen Lage oder Position der Leiter bzw. Heizleiter ist somit äußerst hilfreich zum schnellen Kontaktieren derselben.

Durch das Vorsehen einer gewendelten Anordnung der Leiter oder Heizleiter entlang der Medienleitung kann diese formgebogen werden, ohne dass Leiter oder Heizleiter dazu neigen, ihre Position zu ändern, wodurch es zu einer Rissbildung in der Wandung der Medienleitung kommen könnte. Durch die gewendelte Bewicklung ist ferner eine Zugentlastung der Leiter bzw. Heizleiter beim Biegen der Medienleitung möglich, somit ein Schutz gegen Leiterbruch. Außerdem wird auch durch das gewendelte Bewickeln (axiale Lage) neben dem Vorsehen der Leiter bzw. Heizleiter in einer definierten radialen Lage innerhalb der Wandung der Medienleitung das Auffinden der Leiter bzw. Heizleiter, um diese zu konnektieren, auch bei einem undefinierten Anordnen der Medienleitung zu deren Konnektieren erleichtert. Alternativ zu dem gewendelten Anordnen der Leiter können diese auch parallel zu der Längsachse der Medienleitung angeordnet werden, wobei die Leiter bzw. Heizleiter in diesem Falle vorteilhaft eine axiale Dehnbarkeit aufweisen, um bei einem Formbiegen der Medienleitung nicht zu brechen bzw. sich nicht aus dem Kunststoffmaterial bzw. der Einbettung abzulösen.

Die elektrischen Leiter oder Heizleiter erstrecken sich vorteilhaft mit einer großen Steigung, insbesondere einer Steigung von 20 bis 150 mm, gewendelt um den durch die Innenschicht gebildeten Rohrleitungsteil zum Ermöglichen oder Erleichtern eines Formbiegens der Medienleitung. Im Unterschied zum Anordnen der Leiter oder Heizleiter ohne eine solche Wendelung ergibt sich hier die Möglichkeit, die Medienleitung beliebig auch mit geringen Krümmungsradien formzubiegen und somit an den jeweiligen Einbauraum von seiner Formgebung her anzupassen.

Durch das Anordnen der Leiter bzw. Heizleiter in einer vorbestimmten Lage innerhalb der Wärmeschicht ist es ferner möglich, bei einem vermuteten Leiterbruch die Bruchstelle schneller aufzufinden, da die Position der Leiter bzw. Heizleiter innerhalb der Wärmeschicht von außen und somit auch eine Fehlstelle mühelos feststellbar sind, z.B. durch Spannungs- oder Widerstandsmessung.

Vorteilhaft sind die Leiter oder Heizleiter beschichtet, jedoch ohne ummantelnde Isolierschicht vorgesehen, also ohne eine Kunststoffummantelung. Dies ist bei Einbetten der Leiter oder Heizleiter in eine wärmeleitfähige Schicht möglich. Die Beschichtung dient dem Korrosionsschutz beispielsweise gegen den permeativen Kontakt mit dem durch die Medienleitung strömenden Medium, wie einer wässrigen Harnstofflösung, und kann eine Metallbeschichtung, insbesondere eine Nickelbeschichtung oder eine Zinnbeschichtung sein, die insbesondere eine Schichtdicke von 1 bis 3 µm aufweisen kann. Beispielsweise bestehen die Leiter oder Heizleiter aus einem Kupfermaterial, das mit einer Nickelbeschichtung versehen ist. Eine Nickelschicht erweist sich als besonders auch von den Kosten her vorteilhaft, wohingegen ein Verzinnen zwar ein noch besserer Schutz gegen Korrosion bietet als ein Vernickeln, jedoch im Vergleich zu letzterem sehr viel teurer ist. Eine Schichtdicke der metallischen Beschichtung von 1 bis 3 µm ist ausreichend, um einen guten Schutz gegen Korrosion zu bieten. Grundsätzlich kann auch eine noch dickere Beschichtung vorgesehen werden, was sich allerdings als nicht wirtschaftlich und ggf. im Hinblick auf die Heizleistung schlechter erweist. Beim Kontaktieren der beschichteten elektrischen Leiter bzw. Heizleiter erfolgt diese durch Kontaktieren durch die Beschichtung der insbesondere Kupferleiter bzw. Kupfer-Heizleiter.

Die Wärmeschicht kann als wärmeleitfähige Schicht oder als elektrisch leitfähige Schicht ausgebildet sein, insbesondere aus zumindest einem extrudierbaren Kunststoffmaterial bestehen, insbesondere aus PA11 und/oder PA12. Als wärmeleitfähige Schicht stellen die Heizleiter die Wärmequelle dar, die die wärmeleitfähige Schicht erwärmen, wobei die Wärme durch die wärmeleitfähige Schicht geleitet wird und somit das innerhalb der Medienleitung strömende Medium, vor allem die wässrige Harnstofflösung, erwärmen kann. Ist die Wärmeschicht als elektrisch leitfähige Schicht ausgebildet, stellen die eingebetteten Leiter die Kontaktpole dar, zwischen denen der Strom durch das leitfähige und widerstandsbehaftete Kunststoffmaterial fließt und so zur Erwärmung der leitfähigen Schicht und damit zu einer Erwärmung der Medienleitung und somit des innerhalb von dieser strömenden Mediums führen. Durch Verwendung eines extrudierbaren Kunststoffmaterials lässt sich die Wärmeschicht leicht auf die Innenschicht aufbringen, insbesondere auch mehrlagig, wobei auch eine mehrlagige Bewicklung mit Leitern bzw. Heizleitern vorgesehen werden kann. Ein Anordnen der Leiter oder Heizleiter auf einer vorbestimmten Lage der Wärmeschicht kann auf einfache Weise durch Aufextrudieren zunächst einer Lage mit einer definierten Schichtdicke auf der Innenschicht, nachfolgendes Aufbringen der Leiter oder Heizleiter auf dieser ersten Lage, Aufextrudieren einer weiteren Lage oder Schicht auf der ersten Lage sowie den Leitern bzw. Heizleitern und ggf. erneutes Aufbringen von Leitern bzw. Heizleitern auf der zweiten Lage und nachfolgendes Aufextrudieren einer dritten Lage oder Schicht der Wärmeschicht erfolgen. Auf diese Weise können eine Anzahl von Lagen oder Schichten mit einer vorbestimmten Schichtdicke mit jeweils darauf aufgefügten Leitern bzw. Heizleitern vorgesehen werden und die Wärmeschicht bilden. Auf der Außenseite der letzten Lage der Wärmeschicht kann die äußere Schicht aufgebracht, insbesondere ebenfalls aufextrudiert werden. Als extrudierbares Kunststoffmaterial für die Wärmeschicht eignet sich insbesondere ein leitfähig gefülltes Polyamid, wie PA12 oder PA11, oder ein anderes extrudierbares Material. Der Füllgrad des Kunststoffmaterials ist entscheidend dafür, ob eine wärmeleitfähige oder eine elektrisch leitfähige Schicht vorliegt. In letzterem Fall berühren sich die leitfähigen Partikel der Schicht und führen dadurch zu einer elektrischen Leitfähigkeit. Beispielsweise können 1 bis 5 % Carbon-Nanotubes oder 3 bis 15 % eines leitfähigen Rußes in der Schicht vorhanden sein, wobei bei einer Füllung mit 3 % leitfähigem Ruß eine wärmeleitfähige Schicht und bei einer Füllung mit 15 % leitfähigem Ruß eine elektrisch leitfähige Schicht erzeugt werden kann.

Die ein- oder mehrlagige Innenschicht ist medienresistenter als die übrigen Schichten der Medienleitung und wird daher als medienresistent bezeichnet. Vorteilhaft ist die ein- oder mehrlagige Innenschicht oder zumindest eine Lage der Innenschicht als Sperrschicht ausgebildet und/oder zwischen der Wärmeschicht und der Innenschicht eine Sperrschicht vorgesehen, insbesondere eine laserundurchlässige Sperrschicht. Die Sperrschicht besteht insbesondere aus einem Fluorpolymermaterial, z.B. aus einem oder mehreren der Fluorpolymermaterialien, wie Perfluor(Ethylen-Propylen-)-Kunststoff (FEP), Perfluoralkoxylalkan (PFA), Ethylen-Tetrafluorethylen (ETFE), Polytetrafluorethylen (PTFE), wobei letzteres Material für das Extrudieren einer solchen Innenschicht ungeeignet ist, somit bei Verwendung von PTFE ein anderes Fertigungsverfahren gewählt wird, oder Polyvinylidenfluorid (PVDF), das sich besonders bei der Verwendung mit Brennstoffzellen eignet. Die Innenschicht besteht also vorteilhaft aus einem Material, das einen Durchtritt des innerhalb des von dieser gebildeten Rohres der Medienleitung geführten Mediums oder Bestandteilen von diesem, wie insbesondere einer wässrigen Harnstofflösung, durch die Wandung des Rohres unterbindet bzw. verhindert. Nicht nur das Medium selbst, sondern insbesondere auch Reaktionsprodukte von diesem, wie NH₃ bei einer wässrigen Harnstofflösung, könnten ohne eine solche Sperrschicht durch die Innenschicht hindurch diffundieren und zu einer Beschädigung der Leiter bzw. Heizleiter führen.

Die äußere Schicht oder Deckschicht ebenso wie die Innenschicht können elektrostatisch ableitend und/oder isolierend sein, wobei die Innenschicht normalerweise nicht isolierend, sondern nur elektrostatisch ableitend ist, da sie sich ansonsten aufgrund der Flüssigkeitsreibung beim Durchströmen mit dem Medium elektrostatisch aufladen kann. Insbesondere kann die äußere Schicht eine isolierende geschäumte Außenschicht, insbesondere eine Chloroprenschicht, wie z.B. eine Neopren^{®}- oder Santropren®-Schicht aufweisen. Eine solche elektrostatisch ableitende Wirkung erweist sich zum Verhindern negativer Einflüsse durch statisches Aufladen der Medienleitung als vorteilhaft, wie bei der Verwendung der Medienleitung bei Brennstoffzellen. Hierbei kann auch die Innenschicht eine elektrostatisch ableitende Schicht umfassen, wie beispielsweise eine Perfluor(Ethylen-Propylen-)-Kunststoff (FEP)-Schicht. Die äußere Schicht wird beispielsweise durch Überspritzen der Wärmeschicht auf deren äußerste Lage aufgebracht. Die äußere Schicht mit einer isolierenden Wirkung kann einen Schutz gegen mechanische und ggf. auch chemische Einflüsse aufweisen.

Zusätzlich oder alternativ ist es möglich, eine äußere Isolations- und/oder Schutzeinrichtung beispielsweise in Form eines Wellrohres vorzusehen, wobei zwischen dem Wellrohr und der äußeren Schicht der Medienleitung ein Luftvolumen als Isolationsschicht vorgesehen ist. Eine Verbindungseinrichtung oder -kontur kann zumindest eine Aufnahmenut zur Aufnahme einer die Medienleitung umgebenden Schutz- oder Isolationseinrichtung oder einer Umhüllung, z.B. des Wellrohres, umfassen. Ein solches oder eine solche wird zur Wärmeisolation vorgesehen und umgibt vorteilhaft die Medienleitung von einer Verbindungseinrichtung bis zur anderen. Um eine besonders gute Verbindung mit einer Verbindungskontur vorsehen zu können, erweist es sich als vorteilhaft, eine solche Aufnahmenut zum Eingreifen des Endes der Schutz- oder Isolationseinrichtung oder der Umhüllung vorzusehen. Diese kann beim Vorsehen der Verbindungskontur auf dem Medienleitungsendbereich direkt mit eingeformt werden, wenn die Medienleitung nicht als Endlosleitung ausgebildet wird. Ebenfalls ist es dann möglich, zumindest ein Dichtelement mit einzuarbeiten oder anzufügen, insbesondere eine Zweikomponentendichtung. Alternativ können jedoch auch separate Dichtelemente, wie O-Ringe, oder Klemm- bzw. Spannschellen, an der Verbindungseinrichtung angeordnet werden.

Zwischen der Innenschicht und der Wärmeschicht kann zumindest eine Haftvermittler- und/oder Sperrschicht vorgesehen sein, insbesondere eine Schicht aus einem polymermodifizierten Polyvinylidenfluorid-Homopolymer (PVDF). Die Haftvermittler- und/oder Sperrschicht dient einerseits der Haftvermittlung zwischen der Innenschicht und der Wärmeschicht und andererseits dem Verhindern eines Durchtritts des innerhalb der Innenschicht der Medienleitung strömenden Mediums, insbesondere einer wässrigen Harnstofflösung, in die Wärmeschicht. Die Innenschicht wird abgedichtet, um eine Permeation von (Teil-)Medium in die Wärmeschicht und somit einen Angriff auf die Leiter bzw. Heizleiter durch dieses zu vermeiden. Es kann beispielsweise ein Aufbau der Medienleitung durch die folgenden Schichten vorgesehen werden, wobei diese von innen nach außen eine FEP-Schicht, eine Haftvermittler- und/oder Sperrschicht, optional eine PA12-Schicht, eine weitere leitfähig gefüllte PA12-Schicht als Wärmeschicht und noch eine PA12-Schicht als äußere Schicht oder alternativ eine isolierende geschäumte Außenschicht umfassen kann. Für eine PA12-Außenschicht eignet sich das Vorsehen der Isolations- und/oder Schutzschicht, wie eines schützenden und isolierenden Wellrohres.

Ebenso kann die Sperrschicht zur Begrenzung der Wirkung von Einrichtungen oder (Produktions-)Mitteln zum Freilegen der Leiter bzw. Heizleiter oder zum Abtragen der Deckschichten für weitere Fertigungsschritte dienen, also z.B. als laserundurchlässige Sperrschicht ausgebildet sein.

Für die Herstellung eines solchen Medienleitung können zumindest drei verschiedene Verfahren gewählt werden, die sich insbesondere dadurch unterscheiden, dass bei dem ersten zumindest zwei Lagen der Wärmeschicht aufeinander extrudiert werden, unter Auffügen von elektrischen Leitern bzw. Heizleitern auf der ersten Lage und bei Vorsehen von mehreren weiteren, auf einer jeweiligen weiteren Lage. Bei einem zweiten Verfahren wird die ein- oder mehrlagige Wärmeschicht nach ihrer Fertigung lokal erwärmt und in die weiche Schicht die elektrischen Leiter oder Heizleiter eingelegt bzw. eingebettet. Die lokale Erwärmung kann dabei dahingehend vorgesehen werden, dass zumindest die äußerste Lage der Wärmeschicht bis zu ihrem Schmelzpunkt erwärmt wird oder die Wärmeschicht bis in eine vorbestimmte Tiefe bis zu ihrem Schmelzpunkt erwärmt wird. Die Erwärmung kann z.B. durch Beflammen, Heißluft, Infrarotbestrahlung oder Laserstrahlbeaufschlagung erfolgen. Auch andere Erwärmungsverfahren sind hier möglich. So kann die Wärmeschicht bzw. die Lage der Wärmeschicht, in die die Leiter oder Heizleiter eingebettet werden sollen, prozessbedingt noch erwärmt sein, so dass keine zusätzliche Erwärmung erforderlich ist. Vorteilhaft kann bei Überschreiten des Schmelzpunktes die Wärmeschicht oder die betreffende Lage der Wärmeschicht gekühlt werden, um ein weiteres Eindringen der Leiter bzw. Heizleiter zu unterbinden und somit die definierte und gewünschte Position der Leiter bzw. Heizleiter innerhalb der Wärmeschicht sicherzustellen. Bei der beispielhaften Verwendung von PA12 liegt die Schmelztemperatur etwa bei 165 °C bis 185 °C, insbesondere bei etwa 178 °C, so dass bei Überschreiten einer Temperatur von 185 °C eine Kühlung, insbesondere eine automatisch einsetzende Prozesskühlung vorgesehen werden kann. Um die gewünschte Eindringtiefe nicht zu überschreiten, kann eine bestimmte Zeit bei einem Beflammen oder einer Laserstrahlbeaufschlagung vorgegeben werden oder bei Verwenden eines erhitzten Leiters bzw. Heizleiters die Kraft vorgegeben werden, mit der der Leiter bzw. Heizleiter in die Wandung der Medienleitung hineingedrückt wird. Ferner kann ein lokales Erwärmen einer definierten Schichtdicke bis nahe an deren Schmelzpunkt erfolgen, wobei die gewünschte Eindringtiefe in die Schicht dann erreicht ist, wenn die für das Erwärmen verwendete Energie aufgebraucht ist. Hierbei wird also eine Energiemenge der Wärmequelle vorgegeben, die beim Erwärmungsvorgang aufgebraucht wird, so dass ein Überschreiten der gewünschten Eindringtiefe nicht möglich ist, da hierfür dann keine weitere Energie zur Verfügung steht. Die Eindringtiefe kann durch Kontrolle der diese bestimmenden Parameter genau erreicht werden.

Bei dem dritten Verfahren werden die elektrischen Leiter oder Heizleiter erhitzt und in die Wärmeschicht unter lokalem Aufschmelzen derselben eingebracht wird von deren Außenseite her bzw. von der Außenseite der äußeren Schicht her. Durch Bewickeln mit den erhitzten Leitern bzw. Heizleitern und Aufbringen einer einstellbaren oder vorgegebenen Zugkraft auf diese über eine vorbestimmbare Zeit hinweg dringen diese in der gewünschten Tiefe in die Wärmeschicht ein und werden somit in der gewünschten radialen Position in die Wärmeschicht eingebettet. Um gerade bei Bewickeln mit den erhitzten Leitern bzw. Heizleitern von der Außenseite der äußeren Schicht her die entstehenden Nuten innerhalb der schützenden äußeren Schicht zu verschließen, kann eine Erwärmung der äußeren Schicht von deren Außenseite her vorgesehen werden. Ferner kann eine weitere schützende Schicht auf die äußere Schicht aufgetragen werden, um wiederum einen mechanischen und chemischen Schutz vorzusehen. Die elektrischen Leiter oder Heizleiter werden, wie bereits erwähnt, in einer oder mehreren Lagen gewickelt auf die eine oder mehrere Lage(n) der Wärmeschicht aufgebracht bzw. in die Wärmeschicht eingebracht/eingebettet.

Die Lage der Wärmeschicht, auf der die Leiter oder Heizleiter aufgelagert werden, kann aus einem Material mit einem Schmelzpunkt bestehen, der höher ist als der Schmelzpunkt der darüber liegenden Lage(n). Hierdurch wird vermieden, dass die Leiter oder Heizleiter tiefer in die Wärmeschicht bei deren nachträglichen Einbringen eindringen als dies gewünscht wird. Eine definierte Positionierung der Leiter bzw. Heizleiter in der Wärmeschicht kann somit auch auf diese Weise vorgenommen werden.

Vorteilhaft wird/werden, wie bereits erwähnt, zumindest die Lage(n) der Wärmeschicht durch Extrudieren aufgebracht, da dies eine kostengünstige Herstellung ermöglicht. Besonders effektiv können die Leiter oder Heizleiter bereits beim Extrudieren der Wärmeschicht in diese mit einextrudiert werden unter Verwendung eines Extruderkopfs mit einer Leiter- oder Heizleiterzuführeinrichtung zum Einbetten der Leiter oder Heizleiter beim Extrudieren der Wärmeschicht in diese. Die Leiter- oder Heizleiterzuführeinrichtung ist dabei vorteilhaft so ausgebildet, dass Leiter- oder Heizleiterausgabeöffnungen konzentrisch zu einer Extrusionsöffnung des Extruderkopfes angeordnet sind. Anstelle einer konzentrischen ist auch eine bezüglich der Längsachse der zu erzeugenden Medienleitung radial weiter außenliegende Anordnung möglich. Weiter vorteilhaft ist die Leiter- oder Heizleiterzuführeinrichtung um die Extrusionsöffnung herum drehbar ausgebildet. Hierdurch kann die Wendelung der Leiter oder Heizleiter während des Extrusionsvorgangs erfolgen. Die Leiter- oder Heizleiterzuführeinrichtung kann dabei beispielsweise motorisch angetrieben werden, so dass die gewünschte Steigung der Wendelung präzise erzeugt werden kann. Durch Variieren der Abzugsgeschwindigkeit bei der Extrusion kann durch Streckung die Steifigkeit der erzeugten Schichten bzw. der Medienleitung variiert werden.

Durch das Anordnen der elektrischen Leiter bzw. Heizleiter in einer definierten Position bzw. bezüglich der rohrförmigen Medienleitung radialen Lage ist die Toleranzkette der gesamten Wandung der mehrlagigen Medienleitung unterbrochen und somit uninteressant, da für die Bestimmung der Lage der Leiter bzw. Heizleiter nicht mehr relevant. Es ist nur noch das Toleranzfeld der Wärmeschicht relevant, so dass die zu berücksichtigenden Toleranzen vermindert werden können.

Zur näheren Erläuterung der Erfindung werden im Folgenden Ausführungsbeispiele der Erfindung anhand der Zeichnungen beschrieben. Diese zeigen in:
- Figur 1: eine Querschnittsansicht durch einen Rohrleitungsteil einer erfindungsgemäßen Medienleitung, wobei die Leiter oder Heizleiter in einem Winkel von 180 ° zueinander angeordnet sind,
- Figur 2: eine seitliche Schnittansicht als Prinzipskizze einer noch nicht fertig gestellten ersten Ausführungsform einer erfindungsgemäßen konfektionierten elektrisch beheizbaren Medienleitung während der Herstellung,
- Figur 3: eine seitliche Schnittansicht der Ausführungsform einer erfindungsgemäßen konfektionierten elektrisch beheizbaren Medienleitung auf Figur 1,
- Figur 4: eine seitliche Schnittansicht einer anderen Ausführungsform einer erfindungsgemäßen konfektionierten elektrisch beheizbaren Medienleitung,
- Figur 5: eine Querschnittsansicht einer weiteren Ausführungsform einer erfindungsgemäßen elektrisch beheizbaren Medienleitung,
- Figur 6: eine seitliche Schnittansicht einer weiteren Ausführungsform einer erfindungsgemäßen elektrisch beheizbaren Medienleitung, und
- Figur 7: ein schematisches Blockdiagramm einer Anlage zur Durchführung des erfindungsgemäßen Verfahrens während der Herstellung einer erfindungsgemäßen Medienleitung.

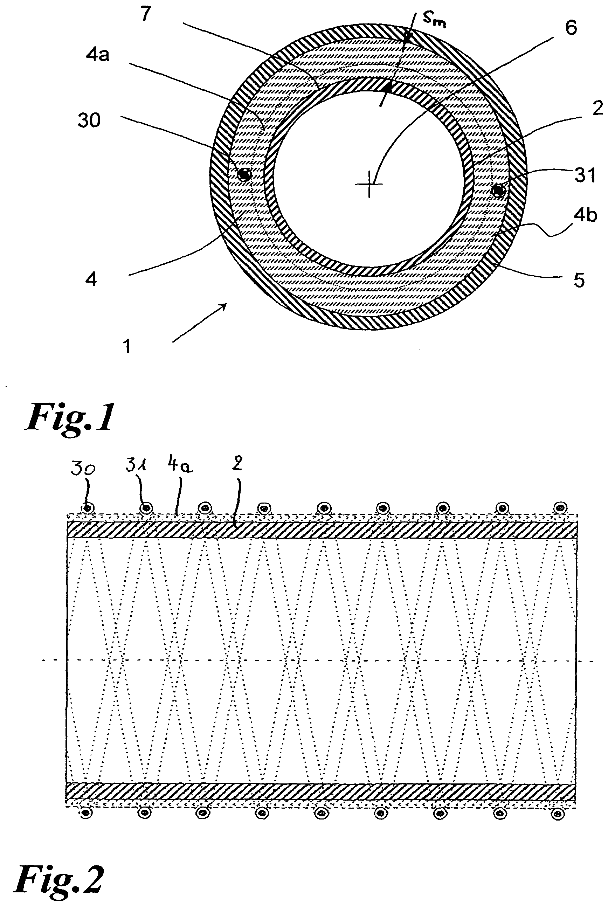

Figur 1 zeigt eine Querschnittansicht einer erfindungsgemäßen beheizbaren Medienleitung 1. Die Medienleitung 1 kann erfindungsgemäß als elektrisch beheizbares mehrlagiges Kunststoffrohr in Form eines sog. MLT-Rohres (Multi Layer Technology) ausgebildet werden. Die Medienleitung 1 umfasst eine Innenschicht 2, die mit dem innerhalb der Medienleitung geführten Medium in Kontakt steht. Ein solches Medium kann beispielsweise AdBlue^{®}sein, ein hochreines Reduktionsmittel für SCR-Katalysator-Systeme (SCR=Selective Catalytic Reduction) in Kraftfahrzeugen. Alternativ kann das Medium in Brennstoffzellenanwendungen auch Wasserstoff (H₂) oder deionisiertes Wasser sein. Die Innenschicht 2 kann ein- oder mehrlagig sein und beispielsweise aus Polyvinylidenfluorid oder einem aliphatischen Polyamid, insbesondere PA12, bestehen. Die Schichtdicke kann 0,1 bis 0,3 mm betragen, wobei auch andere Schichtdicken grundsätzlich möglich sind. Für andere Anwendungen, z.B. an Brennstoffzellen, kann die Innenschicht 2 auch noch eine zusätzliche nicht dargestellte Sperrschicht umfassen, beispielsweise eine Schicht aus einem Fluorpolymermaterial, oder die Innenschicht 2 kann insgesamt aus einem solchen Material bestehen und/oder eine elektrostatisch ableitende Materialschicht aufweisen. Insbesondere haben sich als vorteilhaft geeignet gezeigt FEP (Perfluor-Ethylen-Propylen-Kunststoff), PFA (Perfluoralkoxylalkan), ETFE (Ethylen-Tetrafluorethylen) und PTFE (Polytetrafluorethylen), PVDF (Polyvinylidenfluorid).

Weiter umfasst die Medienleitung 1 erfindungsgemäß eine mit zumindest zwei Leitern oder Heizleitern 30, 31 versehene Wärmeschicht 4 und eine äußere Schicht 5, die aus einer oder mehreren Lagen bestehen kann. Zweckmäßigerweise ist die Wärmeschicht 4 als wärmeleitende Schicht oder als elektrisch leitfähige Schicht ausgebildet. Bevorzugt besteht sie aus zumindest einem extrudierbaren Kunststoffmaterial, insbesondere aus PA11 (Polyamid 11) und/oder PA12 (Polyamid 12). Die Wärmeschicht 4 kann beispielsweise eine Schichtdicke sₘ von 0,3 bis 1,0 mm aufweisen. Sie wird so dünn wie möglich ausgebildet.

Die Leiter oder Heizleiter 30, 31 sind in Längsrichtung entlang der Längsachse 6 der Medienleitung 1 gewendelt, wie gut in den Figuren 2 bis 4 zu erkennen ist. In der dargestellten Ausführungsform sind zwei Leiter oder Heizleiter 30, 31 vorgesehen, die um die Längsachse 6 etwa 180° versetzt angeordnet sind. Die beiden Leiter oder Heizleiter 30, 31 weisen entlang der Längsachse 6 der Medienleitung 1 im Wesentlichen dieselbe Steigung auf, so dass die Leiter oder Heizleiter 30, 31 zwei gegeneinander versetzte Spiralen bilden, ohne sich zu berühren.

Die Leiter oder Heizleiter 30, 31 bestehen bevorzugt aus beschichtetem Kupfer, vorzugsweise vernickeltem oder verzinntem Kupferdraht ohne elektrisch isolierende Drahtummantelung. Dies ist besonders günstig, wenn das Kunststoffmaterial der Wärmeschicht 4 mit leitfähigen Komponenten gefüllt ist, beispielsweise mit Leitruß, Metallpulver, Carbon-Nanotubes etc. und die Leiter oder Heizleiter 30, 31 vornehmlich die Funktion der Stromversorgung übernehmen und unterschiedliches elektrisches Potential aufweisen. Hierbei bildet der mit den elektrisch leitfähigen Komponenten gefüllte Kunststoff die Wärmequelle, da dieser zwischen den als Pole dienenden elektrischen Leitern mit elektrischem Strom durchflossen wird. Für Ausführungsformen der Erfindung, bei denen die Leiter oder Heizleiter 30, 31 unmittelbar als Wärmequelle dienen sollen, können die Leiter oder Heizleiter 30, 31 auch aus einer Heizleiterlegierung nach DIN 17 470 oder einer Widerstandslegierung nach DIN 17 471 bestehen. Die Nickelbeschichtung oder eine Zinnbeschichtung weist bevorzugt eine Schichtdicke von 1 bis 3 µm auf.

Vorteilhaft ist zwischen der Innenschicht 2 und der Wärmeschicht 4 zumindest eine Haftvermittler- und/oder Sperrschicht 7 vorgesehen, insbesondere eine Schicht aus einem polymermodifizierten Polyvinylidenfluorid-Homopolymer (PVDF).

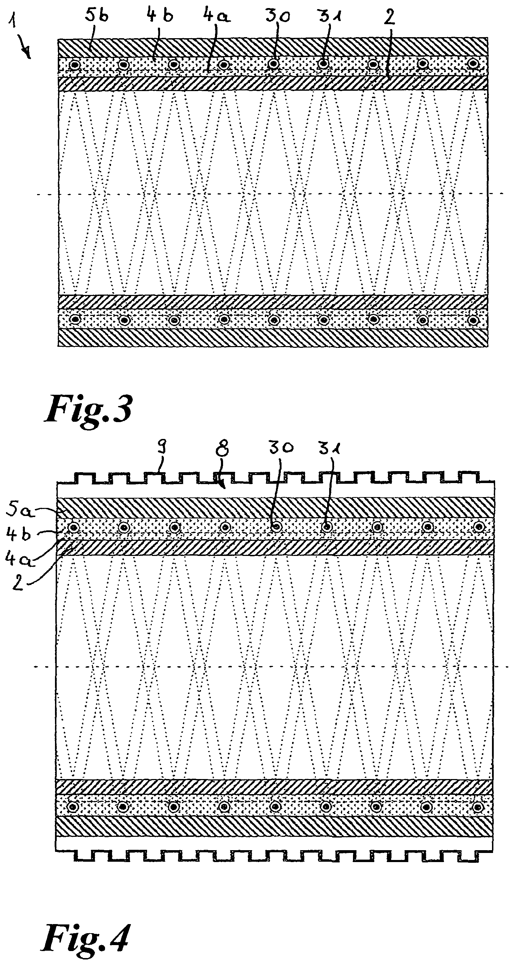

Die äußere Schicht 5 kann, wie bereits erwähnt, mehrlagig sein und insbesondere die Schichten 5a und/oder 5b umfassen, beispielsweise eine isolierende geschäumte Außenschicht, insbesondere aus einem Chloroprenkautschuk, wie bei der Ausführungsform der Erfindung in Figur 3 möglich. Alternativ oder zusätzlich (vgl. Figur 4, bei der die äußere Schicht als äußere Polyamidschicht 5a ausgebildet ist) kann eine isolierende Luftschicht 8 innerhalb eines umhüllenden Wellrohres 9, z.B. aus PA12, vorgesehen sein. Für einige Anwendungen ist es vorteilhaft, wenn die Außenseite der äußeren Schicht 5 bzw. des Wellrohres 9 oder die Innenschicht elektrostatisch ableitend ausgerüstet ist.

Die äußere Polyamidschicht 5a kann ein- oder mehrlagig ausgebildet sein bzw. zumindest eine weitere Lage oder Schicht aufweisen, wie beispielsweise eine Sperrschicht, insbesondere eine elektrostatisch ableitende Sperrschicht. Bei Vorsehen einer Laserbeflammung zum Erwärmen der Wärmeschicht 4 zum Einlegen der Leiter oder Heizleiter 30, 31 in diese, wie nachfolgend noch näher erläutert wird, ist die Sperrschicht vorteilhaft laserdurchlässig ausgebildet.

Die in Figur 2 dargestellte seitliche Schnittansicht (Längsschnitt) zeigt den Zustand während der Herstellung der Medienleitung 1, bei dem bereits die Innenschicht 2 mit der ersten Lage 4a der Wärmeschicht 4 und den darauf angeordneten beschichteten Leitern oder Heizleitern 30, 31 versehen ist. Die Leiter oder Heizleiter 30, 31 sind um die erste Lage 4a herum gewickelt, wobei die beiden Leiter bzw. Heizleiter 30, 31 parallel gewickelt sind mit einem radialen Winkelabstand von 180°.

Die erste Lage 4a mit den aufgefügten Leitern bzw. Heizleitern 30, 31 wird nachfolgend mit einer zweiten Lage 4b der Wärmeschicht 4 bedeckt, insbesondere werden die beiden Lagen 4a, 4b aufextrudiert. Auf die zweite Lage 4b könnte wiederum eine Lage Leiter bzw. Heizleiter 30, 31 aufgebracht bzw. aufgewickelt werden und darauf wiederum eine weitere Lage der Wärmeschicht. Dieser Vorgang kann mehrfach wiederholt werden, bis die gewünschte Anzahl von Wärmeschichtlagen und Leiter- bzw. Heizleiterlagen erreicht ist, wobei die Leiter oder Heizleiter auch lediglich partiell mehrlagig aufgewickelt werden können, um lokal einen größeren Wärmeeintrag in die Medienleitung zu ermöglichen.

Auf die letzte Lage der Wärmeschicht 4, in Figur 3 die zweite Lage 4b, wird die äußere Schicht in Form einer Chloroprenschicht 5b, wie einer Santropren^{®}- oder Neopren^{®}-Schicht, aufgebracht. Diese kann auch als Außenschicht zum mechanischen und/oder chemischen Schutz der Medienleitung ausgeführt sein. Alternativ kann, wie in Figur 4 gezeigt, das Wellrohr 9 unter Belassen der isolierenden Luftschicht 8 zwischen äußerer Schicht in Form einer Polyamidschicht 5a und dem Wellrohr 9, als schützende und isolierende äußere Umhüllung auf die Medienleitung 1 aufgefügt werden. Die Polyamidschicht 5a kann eine PA11- oder PA12-Schicht sein.

Die Leiter oder Heizleiter 30, 31 können im Extruderkopf einer Extrusionseinrichtung, mittels derer die Schichten der Medienleitung, insbesondere die Wärmeschicht, extrudiert werden/wird, angeordnet werden. Das Einbringen der Leiter oder Heizleiter in die Wärmeschicht kann dabei während des Extrusionsprozesses oder in einem separaten Verfahren nach der Extrusion erfolgen. Vor allem bei Einbringen der Leiter oder Heizleiter während des Extrusionsprozesses erweist sich das Vorsehen eines rotierbaren, die Leiter oder Heizleiter ausgebenden Abschnitts an dem Extruderkopf als vorteilhaft. Hierdurch kann die gewünschte Wendelung der Leiter oder Heizleiter beim Einlegen in die zugleich extrudierte Wärmeschicht auf einfache Weise erzeugt werden.

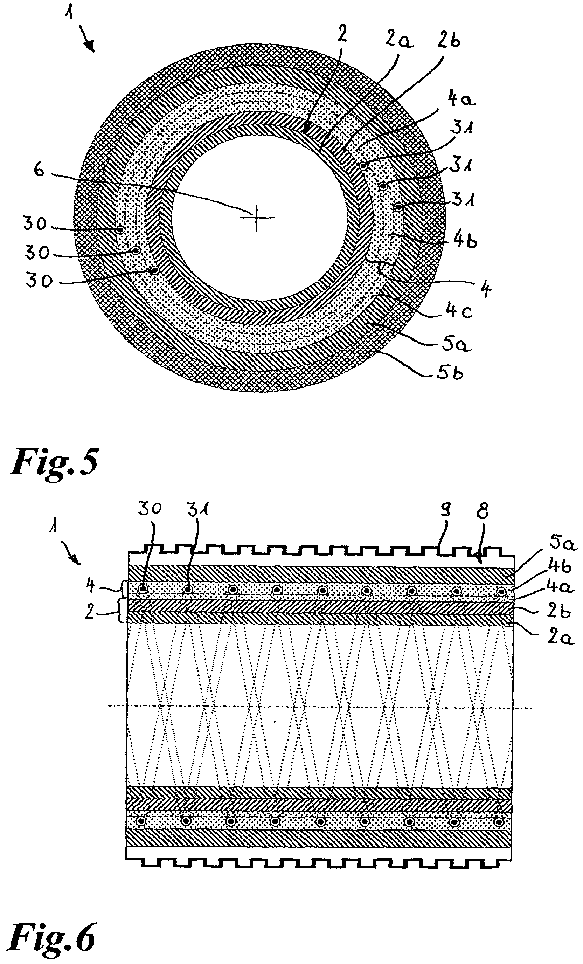

In Figur 5 ist eine weitere Ausführungsform der Medienleitung 1 gezeigt. Diese weist eine erste Lage 2a der Innenschicht 2 auf, die medienresistent und/oder elektrisch ableitend ist. Eine darüber angeordnete zweite Lage 2b der Innenschicht 2 besteht aus einem Polyamid. Auf dieser sind erste Leiter oder Heizleiter 30, 31 angeordnet. Zwischen diesen ist eine erste Lage 4a der Wärmeschicht 4 angeordnet. Auf dieser sind zweite Leiter bzw. Heizleiter 30, 31 versetzt zu den ersten Leitern bzw. Heizleitern 30, 31 angeordnet. Zwischen diesen zweiten Leitern bzw. Heizleitern ist eine zweite Lage 4b der Wärmeschicht 4 vorgesehen. Auf dieser sind dritte Leiter bzw. Heizleiter 30, 31 angeordnet. Diese dritten Leiter oder Heizleiter 30, 31 sind in eine oder auf einer dritte(n) Lage 4c der Wärmeschicht 4 eingebettet oder angeordnet. Die Lagen 4a, 4b, 4c der Wärmeschicht 4 bestehen aus Polyamid, z.B. aus leitfähig gefülltem PA12.

Über der dritten Lage 4c der Wärmeschicht 4 sowie den Leitern oder Heizleitern 30, 31 innerhalb dieser oder auf dieser ist eine äußere Polyamidschicht 5a angeordnet. Die Schichten bzw. Lagen 2b, 4a, 4b, 4c mit den in diesen eingebetteten Leitern oder Heizleitern 30, 31 und die Schicht 5a bilden einen gemeinsamen festen Aufbau. Über der äußeren Polyamidschicht 5a ist eine Isolationsschicht, hier die äußere Schicht 5b angeordnet. Diese kann auch elektrisch ableitend sein. Einzelne Leiter bzw. Heizleiter 30, 31 der drei Leiter- bzw. Heizleiterlagen können ab- bzw. zugeschaltet werden, wobei jeweils Plusleiter und Minusleiter vorgesehen sind. Die Wärmezufuhr kann dadurch gezielt gesteuert bzw. reguliert werden.

Figur 6 zeigt eine weitere Variante der Medienleitung 1, bei der wiederum eine erste Lage 2a der Innenschicht 2 in Form einer medienresistenten und/oder elektrisch ableitenden Schicht vorgesehen und von einer zweiten Lage 2b der Innenschicht in Form einer Polyamidschicht überdeckt ist. Auf dieser ist eine erste Lage 4a der Wärmeschicht 4 angeordnet. Auf dieser sind Leiter oder Heizleiter 30, 31 eingebettet oder angeordnet und von einer zweiten Lage 4b der Wärmeschicht 4 überdeckt, die ebenfalls zwischen den Leitern bzw. Heizleitern 30, 31 angeordnet ist. Über der zweiten Lage 4b der Wärmeschicht 4 ist die äußere Polyamidschicht 5a angeordnet. Diese wird unter Belassen der isolierenden Luftschicht 8 von dem Wellrohr 9 als Schutzeinrichtung umhüllt. Der Aufbau der Medienleitungswandung ähnelt somit dem gemäß der Ausführungsform nach Figur 4, wobei im Unterschied zu dieser die Innenschicht in Figur 6 zweilagig ausgebildet ist. Die äußere Polyamidschicht 5a kann, wie dargestellt, ein- oder auch mehrlagig sein, beispielsweise eine elektrostatisch ableitende Sperrschicht umfassen.

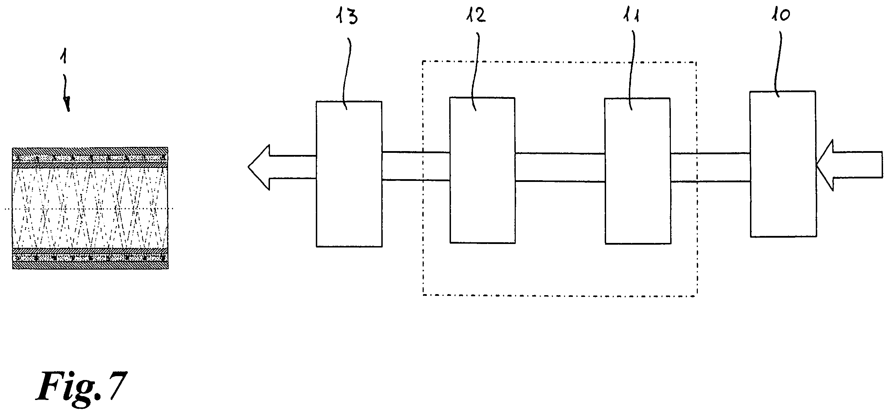

In Figur 7 sind die einzelnen Schritte eines alternativen Herstellungsverfahrens zum Herstellen der Medienleitung 1 skizziert. Dabei wird in einem ersten Schritt bzw. einer ersten Station 10 die ein- oder mehrlagige Innenschicht 2 eines Rohrleitungsteils gefertigt. Auf dieser wird die ein- oder mehrlagige Wärmeschicht 4 aufgebracht. In einer zweiten Station 11 bzw. einem zweiten Schritt wird der mit der Innenschicht 2 und der ein- oder mehrlagigen Wärmeschicht 4 versehene Rohrleitungsteil lokal erwärmt, insbesondere durch Beflammen, Infrarotstrahlung, Heißluft, Laserstrahlbeaufschlagung etc. Die lokale Erwärmung erfolgt bis zum Schmelzpunkt der Wärmeschicht 4 bzw. von deren äußerster Lage oder einer der weiteren Lagen. Vorteilhaft wird die innerste Lage 4a der Wärmeschicht 4 jedoch nicht bis zu deren Schmelzpunkt erwärmt. Ist die Wärmeschicht 4 prozessbedingt noch erwärmt, kann ein zusätzliches Erwärmen und somit auch der Schritt bzw. die Station 11 entfallen.

In einer dritten Station bzw. einem dritten Schritt 12 wird der Rohrleitungsteil mit den Leitern oder Heizleitern 30, 31 bewickelt. Diese dringen dabei in die geschmolzene(n) Lage(n) der Wärmeschicht 4 ein. Um zu verhindern, dass die Leiter oder Heizleiter 30, 31 in die Innenschicht 2 eindringen, wird die innerste Lage 4a der Wärmeschicht 4 nicht geschmolzen, ggf. gekühlt, um nicht zu erweichen und ein Auflagern der Leiter oder Heizleiter 30, 31 auf dieser zu ermöglichen, wenn dies gewünscht wird.

Die Stationen 11 und 12 können in einer Station zusammengefasst bzw. integriert werden.

In einem vierten Schritt bzw. einer vierten dritten Station 13 wird die ein- oder mehrlagige äußere Schicht 5 aufgebracht, so dass die mit zumindest den drei Schichten 2, 4 und 5 versehene Medienleitung 1 entsteht.

Alternativ zu dem lokalen Erwärmen der Wärmeschicht 4 kann ein Rohrleitungsteil vorgesehen werden, der bereits mit der Innenschicht 2, der einoder mehrlagigen Wärmeschicht 4 und der äußeren Schicht 5a versehen ist. Zum Einbetten der Leiter oder Heizleiter 30, 31 werden diese erhitzt und auf die Außenseite der äußeren Polyamidschicht 5a aufgewickelt unter Aufbringen einer solchen radial nach innen bezüglich des Rohrleitungsteils gerichteten Kraft, dass die Leiter oder Heizleiter 30, 31 in der gewünschten Tiefe in die Wärmeschicht eindringen und darin somit nachfolgend ebenfalls in der vorbestimmten radialen Tiefe liegen. Zum Abdichten der äußeren Polyamidschicht 5a, die durch die von außen lokal eingebrachten Leiter mit Schlitzen bzw. Nuten versehen ist, kann deren Oberfläche nachfolgend durch Erwärmen wieder geschlossen werden. Alternativ kann eine Deckschicht aufgebracht werden.

In Abwandlung zu dem vorstehenden Verfahren können die erhitzten Leiter oder Heizleiter 30, 31 auch bereits vor Aufbringen der äußeren Polyamidschicht 5 von außen in die ein- oder mehrlagigen Wärmeschicht 4 eingebracht werden. Die äußere Polyamidschicht 5a bedeckt nachfolgend die Wärmeschicht 4. Ein Schutz bzw. eine Isolation nach außen gegen mechanische und chemische Einflüsse kann durch Vorsehen einer Chloroprenschicht 5b erzeugt werden bzw. durch Vorsehen eines Wellrohres 9. Beide Varianten ermöglichen auch eine elektrische Isolation der Medienleitung.

Zwischen allen oder einzelnen der Lagen bzw. Schichten der Medienleitung 1 in den vorstehend beschriebenen Ausführungsvarianten können jeweils Sperrschichten angeordnet werden.

Neben den im Vorstehenden beschriebenen und in den Figuren gezeigten Ausführungsvarianten von mehrlagigen elektrisch beheizbaren Medienleitungen, wobei deren Merkmale beliebig miteinander kombiniert werden können, sind noch zahlreiche weitere möglich, bei denen jeweils die elektrischen Leiter oder Heizleiter in Längsrichtung der Medienleitung gewendelt in einer radial vorbestimmten Lage innerhalb der Wärmeschicht angeordnet sind oder werden.

## Patentansprüche

1. Mehrlagige elektrisch beheizbare Medienleitung (1) mit einer medienresistenten Innenschicht (2), einer mit zumindest zwei Leitern oder Heizleitern (30, 31) versehenen Wärmeschicht (4) und einer äußeren Schicht (5), wobei die Schichten (2,4,5) der Medienleitung (1) ein- oder mehrlagig sind,
**dadurch gekennzeichnet, dass**
die Leiter oder Heizleiter (30, 31) in Längsrichtung der Medienleitung (1) gewendelt in einer radial vorbestimmten Position innerhalb der Wärmeschicht (4, 4a, 4b) eingebettet sind, wobei die Leiter oder Heizleiter (30, 31) beschichtet, jedoch ohne ummantelnde Isolierschicht vorgesehen sind und die ein- oder mehrlagige Innenschicht (2) oder zumindest eine Lage der Innenschicht (2) als Sperrschicht ausgebildet ist und/oder zwischen der Innenschicht (2) und der Wärmeschicht (4) zumindest eine Haftvermittler- und/oder Sperrschicht vorgesehen ist.

2. Medienleitung (1) nach Anspruch 1,
**dadurch gekennzeichnet, dass**
die Beschichtung eine Metallbeschichtung ist, insbesondere eine Nickelbeschichtung oder eine Zinnbeschichtung, insbesondere mit einer Schichtdicke von 1 bis 3 µm.

3. Medienleitung (1) nach einem der vorstehenden Ansprüche,
**dadurch gekennzeichnet, dass**
die Wärmeschicht (4) als wärmeleitfähige Schicht oder als elektrisch leitfähige Schicht ausgebildet ist, insbesondere aus zumindest einem extrudierbaren Kunststoffmaterial besteht, insbesondere aus PA11 und/oder PA12.

4. Medienleitung (1) nach einem der vorstehenden Ansprüche,
**dadurch gekennzeichnet, dass**
zwischen der Wärmeschicht (4) und der Innenschicht (2) eine laserundurchlässige Sperrschicht vorgesehen ist, insbesondere die Sperrschicht aus einem Fluorpolymermaterial besteht, insbesondere aus einem oder mehreren der Fluorpolymermaterialien FEP, PFA, ETFE, PTFE, PVDF.

5. Medienleitung (1) nach einem der vorstehenden Ansprüche,
**dadurch gekennzeichnet, dass**
die äußere Schicht (5b) elektrostatisch ableitend und/oder isolierend ist, insbesondere eine isolierende geschäumte Außenschicht ist, insbesondere eine Chloroprenschicht, und/oder dass die Innenschicht (2) elektrostatisch ableitend ist.

6. Medienleitung (1) nach einem der Ansprüche 1 bis 4,
**dadurch gekennzeichnet, dass**
zumindest ein Wellrohr (9) als schützende und isolierende äußere Umhüllung der Medienleitung (1) vorgesehen ist, wobei zwischen der äußeren Schicht (5,5a) der Medienleitung (1) und dem Wellrohr (9) ein isolierendes Luftvolumen (8) vorgesehen ist.

7. Medienleitung (1) nach einem der vorstehenden Ansprüche,
**dadurch gekennzeichnet, dass**
zwischen der Innenschicht (2) und der Wärmeschicht (4) eine Schicht aus einem polymermodifizierten Polyvinylidenfluorid-Homopolymer (PVDF) vorgesehen ist.

8. Verfahren zum Herstellen einer mehrlagigen elektrisch beheizbaren Medienleitung (1) nach einem der vorstehenden Ansprüche,
**dadurch gekennzeichnet, dass**
eine ein- oder mehrlagige Innenschicht (2) gefertigt wird,
zum Anordnen von Leitern oder Heizleitern (30, 31) in einer definierten Lage in der Wandung der Medienleitung auf die Innenschicht (2) eine erste Lage (4a) einer Wärmeschicht (4) aufgebracht wird,
auf diese erste Lage (4a) der Wärmeschicht (4) zumindest zwei Leiter oder Heizleiter (30, 31) aufgebracht werden,
eine zweite Lage (4b) der Wärmeschicht (4) aufgebracht wird, wobei die Leiter oder Heizleiter (30, 31) in die zweite Lage (4b) der Wärmeschicht (4) eingebettet werden, und
auf die zweite (4b) oder zumindest eine weitere Lage der Wärmeschicht (4) eine ein- oder mehrlagige äußere Schicht (5) aufgebracht wird.

9. Verfahren zum Herstellen einer mehrlagigen elektrisch beheizbaren Medienleitung (1) nach einem der Ansprüche 1 bis 7,
**dadurch gekennzeichnet, dass**
eine ein- oder mehrlagige Innenschicht (2) gefertigt wird,
auf die Innenschicht (2) eine Wärmeschicht (4) als ein- oder mehrlagige Schicht aufgebracht wird,
die Wärmeschicht (4) lokal bis zum teilweisen Aufschmelzen erwärmt wird oder erwärmt ist, in die aufgeschmolzene Wärmeschicht (4) zumindest zwei Leiter oder Heizleiter (30, 31) in über die Längserstreckung der Medienleitung hinweg gewendelter Anordnung eingebracht werden und auf die Wärmeschicht (1) eine ein- oder mehrlagige äußere Schicht (5) aufgebracht wird.

10. Verfahren nach Anspruch 9,
**dadurch gekennzeichnet, dass**
die lokale Erwärmung dahingehend vorgesehen ist, dass zumindest die äußerste Lage (4b) der Wärmeschicht (4) bis zu ihrem Schmelzpunkt erwärmt wird oder die Wärmeschicht (4) bis in eine vorbestimmte Tiefe bis zu ihrem Schmelzpunkt erwärmt wird.

11. Verfahren nach Anspruch 9 oder 10,
**dadurch gekennzeichnet, dass**
die Erwärmung durch Beflammen, Heißluft, Infrarotbestrahlung, Laserstrahlbeaufschlagung erfolgt.

12. Verfahren nach einem der Ansprüche 9 bis 11,
**dadurch gekennzeichnet, dass**
bei Überschreiten des Schmelzpunktes die Wärmeschicht (4) oder die betreffende Lage (4a) der Wärmeschicht (4) gekühlt wird.

13. Verfahren zum Herstellen einer mehrlagigen elektrisch beheizbaren Medienleitung (1) nach einem der Ansprüche 1 bis 7,
**dadurch gekennzeichnet, dass**
eine ein- oder mehrlagige Innenschicht (2) gefertigt wird,
auf der Innenschicht (2) eine ein- oder mehrlagige Wärmeschicht (4) aufgebracht wird,
auf die Wärmeschicht (4) eine ein- oder mehrlagige äußere Schicht (5) aufgebracht wird,
zumindest zwei Leiter oder Heizleiter (30, 31) erwärmt und vor Aufbringen der äußeren Schicht (5) oder danach von der jeweiligen Außenseite der Wärme- (4) oder äußeren Schicht (5) her bis in eine vorbestimmte Tiefe in die Wärmeschicht (4) eingebracht werden.

14. Verfahren nach einem der Ansprüche 10 bis 13,
**dadurch gekennzeichnet, dass**
die Lage der Wärmeschicht (4), auf der die Leiter oder Heizleiter (30, 31) aufgelagert werden, aus einem Material mit einem Schmelzpunkt besteht, der höher ist als der Schmelzpunkt der darüber liegenden Lage(n) und/oder zumindest die Lage(n) (4a, 4b) der Wärmeschicht (4) durch Extrudieren aufgebracht wird/werden und/oder dass die Leiter oder Heizleiter (30, 31) in einer oder mehreren Lagen gewickelt auf die eine oder mehrere Lage(n) (4a, 4b) der Wärmeschicht (4) aufgebracht werden.

15. Vorrichtung zur Durchführung des Verfahrens nach einem der Ansprüche 8 oder 9 bis 12 oder 13 bis 14,
**dadurch gekennzeichnet, dass**
die Vorrichtung zumindest einen Extruderkopf mit einer Leiter- oder Heizleiterzuführeinrichtung zum Einbetten der Leiter oder Heizleiter beim Extrudieren der Wärmeschicht (4) aufweist, wobei die Leiter- oder Heizleiterzuführeinrichtung Leiter- oder Heizleiterausgabeöffnungen konzentrisch zu einer Extrusionsöffnung des Extruderkopfes aufweist und wobei die Leiter- oder Heizleiterzuführeinrichtung um die Extrusionsöffnung herum drehbar ausgebildet ist.

## Claims

1. Multi-ply electrically heatable media line (1) having a media-resistant inner layer (2), a thermal layer (4) provided with at least two conductors or heating conductors (30, 31), and an outer layer (5), wherein the layers (2, 4, 5) of the media line (1) are single- or multi-ply,
**characterised in that**
the conductors or heating conductors (30, 31), wound in the longitudinal direction of the media line (1), are embedded within the thermal layer (4, 4a, 4b) in a radially predetermined position, wherein the conductors or heating conductors (30, 31) are coated but not provided with a surrounding insulating layer, and the single- or multi-ply inner layer (2), or at least one ply of the inner layer (2), is in the form of a barrier layer, and/or at least one adhesion promoter layer and/or barrier layer is provided between the inner layer (2) and the thermal layer (4).

2. Media line (1) according to claim 1,
**characterised in that**
the coating is a metal coating, in particular a nickel coating or a tin coating, in particular having a layer thickness of from 1 to 3 µm.

3. Media line (1) according to any one of the preceding claims,
**characterised in that**
the thermal layer (4) is in the form of a thermally conductive layer or in the form of an electrically conductive layer, in particular consists of at least one extrudable plastics material, in particular of PA11 and/or PA12.

4. Media line (1) according to any one of the preceding claims,
**characterised in that**
a laser-impermeable barrier layer is provided between the thermal layer (4) and the inner layer (2), in particular the barrier layer consists of a fluoropolymer material, in particular of one or more of the fluoropolymer materials FEP, PFA, ETFE, PTFE,
PVDF.

5. Media line (1) according to any one of the preceding claims,
**characterised in that**
the outer layer (5b) is electrostatically dissipative and/or insulating, in particular is an insulating foamed outer layer, in particular a chloroprene layer, and/or **in that** the inner layer (2) is electrostatically dissipative.

6. Media line (1) according to any one of claims 1 to 4,
**characterised in that**
at least one corrugated pipe (9) is provided as a protecting and insulating outer sheath of the media line (1), wherein an insulating air volume (8) is provided between the outer layer (5, 5a) of the media line (1) and the corrugated pipe (9).

7. Media line (1) according to any one of the preceding claims,
**characterised in that**
a layer of a polymer-modified polyvinylidene fluoride homopolymer (PVDF) is provided between the inner layer (2) and the thermal layer (4).

8. Method for producing a multi-ply electrically heatable media line (1) according to any one of the preceding claims,
**characterised in that**
a single- or multi-ply inner layer (2) is manufactured,
in order to arrange conductors or heating conductors (30, 31) in a defined position in the wall of the media line (1), a first ply (4a) of a thermal layer (4) is applied to the inner layer (2),
at least two conductors or heating conductors (30, 31) are applied to that first ply (4a) of the thermal layer (4),
a second ply (4b) of the thermal layer (4) is applied, wherein the conductors or heating conductors (30, 31) are embedded into the second ply (4b) of the thermal layer (4), and
a single- or multi-ply outer layer (5) is applied to the second (4b) or at least one further ply of the thermal layer (4).

9. Method for producing a multi-ply electrically heatable media line (1) according to any one of claims 1 to 7,
**characterised in that**
a single- or multi-ply inner layer (2) is manufactured,
a thermal layer (4) in the form of a single- or multi-ply layer is applied to the inner layer (2),
the thermal layer (4) is heated or has been heated locally until partially melting, at least two conductors or heating conductors (30, 31) are introduced into the melted thermal layer (4) in an arrangement wound over the longitudinal extent of the media line, and a single- or multi-ply outer layer (5) is applied to the thermal layer (1).

10. Method according to claim 9,
**characterised in that**
the local heating is provided such that at least the outermost ply (4b) of the thermal layer (4) is heated to its melting point, or the thermal layer (4) is heated to its melting point to a predetermined depth.

11. Method according to claim 9 or 10,
**characterised in that**
heating takes place by flame treatment, hot air, infra-red irradiation, laser beam treatment.

12. Method according to any one of claims 9 to 11,
**characterised in that**
if the melting point is exceeded, the thermal layer (4) or the relevant ply (4a) of the thermal layer (4) is cooled.

13. Method for producing a multi-ply electrically heatable media line (1) according to any one of claims 1 to 7,
**characterised in that**
a single- or multi-ply inner layer (2) is manufactured,
a single- or multi-ply thermal layer (4) is applied to the inner layer (2),
a single- or multi-ply outer layer (5) is applied to the thermal layer (4),
at least two conductors or heating conductors (30, 31) are heated and, before application of the outer layer (5) or thereafter, are introduced into the thermal layer (4) to a predetermined depth from the respective outer side of the thermal layer (4) or outer layer (5).

14. Method according to any one of claims 10 to 13,
**characterised in that**
the ply of the thermal layer (4) to which the conductors or heating conductors (30, 31) are applied consists of a material having a melting point which is higher than the melting point of the ply/plies located above it, and/or at least the ply/plies (4a, 4b) of the thermal layer (4) is/are applied by extrusion, and/or **in that** the conductors or heating conductors (30, 31) are applied wound in one or more plies to the one or more ply/plies (4a, 4b) of the thermal layer (4).

15. Apparatus for carrying out the method according to any one of claims 8 or 9 to 12 or 13 to 14,
**characterised in that**
the apparatus has at least one extruder head having a conductor or heating conductor feeding device for embedding the conductors or heating conductors during extrusion of the thermal layer (4), wherein the conductor or heating conductor feeding device has conductor or heating conductor openings concentric with an extrusion opening of the extruder head, and wherein the conductor or heating conductor feeding device is configured so as to be rotatable about the extrusion opening.

## Revendications

1. Ligne de fluide multicouche chauffable électriquement (1) comprenant une couche interne résistante aux fluides (2), une couche thermique (4) comprenant au moins deux conducteurs ou conducteurs chauffants (30, 31) et une couche externe (5), les couches (2, 4 ,5) de la ligne de fluide (1) étant monocouches ou multicouches,
**caractérisée en ce que**
les conducteurs ou conducteurs chauffants (30, 31) sont enroulés dans la direction longitudinale de la ligne de fluide (1) dans une position radialement prédéterminée à l'intérieur de la couche thermique (4, 4a, 4b), **en ce que** les conducteurs ou conducteurs chauffants (30, 31) sont recouverts mais dépourvus de couche isolante de gainage, **en ce que** la couche interne (2) mono- ou multicouche ou au moins une couche de la couche interne (2) forme une couche barrière, et/ou **en ce qu'**entre la couche interne (2) et la couche thermique (4), au moins un promoteur d'adhérence et/ou une couche barrière est prévu(e).

2. Ligne de fluide (1) selon la revendication 1, **caractérisée en ce que** le revêtement est un revêtement métallique, en particulier un revêtement de nickel ou un revêtement d'étain, en particulier avec une épaisseur de couche de 1 à 3 µm.

3. Ligne de fluide (1) selon l'une des revendications précédentes, **caractérisée en ce que** la couche thermique (4) est réalisée sous forme de couche thermoconductrice ou sous forme de couche électriquement conductrice, notamment constituée d'au moins une matière plastique extrudable, en particulier du PA11 et / ou du PA12.

4. Ligne de fluide (1) selon l'une des revendications précédentes, **caractérisée en ce qu'**entre la couche thermique (4) et la couche interne (2), une couche barrière imperméable au laser est prévue, en particulier la couche barrière est constituée d'un matériau fluoropolymère, en particulier d'un ou plusieurs des matériaux fluoropolymères FEP, PFA, ETFE, PTFE, PVDF.

5. Ligne de fluide (1) selon l'une des revendications précédentes, **caractérisée en ce que** la couche externe (5b) est électrostatiquement dissipatrice et/ou isolante, en particulier est une couche externe isolante en mousse, en particulier une couche de chloroprène, et/ou **en ce que** la couche interne (2) est électrostatiquement dissipatrice.

6. Ligne de fluide (1) selon l'une des revendications 1 à 4, **caractérisée en ce qu'**au moins un tuyau ondulé (9) est prévu comme gaine externe protectrice et isolante de la ligne de fluide (1), dans laquelle entre la couche externe (5, 5a) de la ligne de fluide (1) et le tuyau ondulé (9), un volume d'air isolant (8) est prévu.

7. Ligne de fluide (1) selon l'une des revendications précédentes, **caractérisée en ce qu'**entre la couche interne (2) et la couche thermique (4), se trouve une couche en homopolymère de polyfluorure de vinylidène modifié par un polymère (PVDF).

8. Procédé de production d'une ligne de fluide multicouche chauffable électriquement (1) selon l'une des revendications précédentes, **caractérisé en ce qu'**une couche interne (2) monocouche ou multicouche est produite pour disposer des conducteurs ou des conducteurs chauffants (30, 31) dans une position définie sur la paroi de la ligne de fluide, une première couche (4a) d'une couche thermique (4) est appliquée sur la couche interne (2), et au moins deux conducteurs ou conducteurs chauffants (30, 31) sont appliqués sur cette première couche (4a) de la couche thermique (4), une seconde couche (4b) de la couche thermique (4) est appliquée, les conducteurs ou conducteurs chauffants (30, 31) étant noyés dans la deuxième couche (4b) de la couche thermique (4), et sur la deuxième (4b) ou sur au moins une autre couche de la couche thermique (4) une couche externe (5) monocouche ou multicouche est appliquée.

9. Procédé de production d'une ligne de fluide multicouche chauffable électriquement (1) selon l'une des revendications 1 à 7, **caractérisé en ce qu'**une couche interne (2) monocouche ou multicouche est fabriquée, sur la couche interne (2) une couche thermique (4) monocouche ou multicouche est appliquée, la couche thermique (4) est chauffée localement ou est chauffée jusqu'à ce qu'elle fonde partiellement, au moins deux conducteurs ou conducteurs chauffants (30, 31) sont introduits dans la couche thermique fondue (4) selon un agencement enroulé sur l'étendue longitudinale de la ligne de fluide et une couche externe (5) monocouche ou multicouche est appliquée sur la couche thermique (1).

10. Procédé selon la revendication 9, **caractérisé en ce que** le chauffage local est prévu de telle sorte qu'au moins la couche la plus extérieure (4b) de la couche thermique (4) soit chauffée jusqu'à son point de fusion ou la couche thermique (4) est chauffée jusqu'à une profondeur prédéterminée jusqu'à son point de fusion.

11. Procédé selon la revendication 9 ou 10, **caractérisé en ce que** le chauffage est réalisé par exposition à une flame, à de l'air chaud, à un rayonnement infrarouge, à un faisceau laser.

12. Procédé selon l'une des revendications 9 à 11, **caractérisé en ce que** lorsque le point de fusion est dépassé, la couche thermique (4) ou la couche correspondante (4a) de la couche thermique (4) est refroidie.

13. Procédé de production d'une ligne de fluide multicouche chauffable électriquement (1) selon l'une des revendications 1 à 7, **caractérisé en ce qu'**une couche interne (2) monocouche ou multicouche est réalisée, sur la couche interne (2) une couche thermique monocouche ou multicouche (4) est appliquée, sur la couche thermique (4) une couche externe (5) monocouche ou multicouche est appliquée, au moins deux conducteurs ou conducteurs chauffants (30, 31) chauffés sont introduits dans la couche thermique (4) à une profondeur prédéterminée, soit avant application de la couche externe (5), soit après, respectivement à l'extérieur de la couche thermique (4) ou de la couche externe (5).

14. Procédé selon l'une des revendications 12 à 13, **caractérisé en ce que** la couche de la couche thermique (4) sur laquelle sont placés les conducteurs ou conducteurs chauffants (30, 31) est constituée d'un matériau dont le point de fusion est supérieur au point de fusion de la ou des couche(s) sus-jacente(s) et **en ce qu'**au moins la (les) couche(s) (4a, 4b) de la couche thermique (4) est / sont appliquée par extrusion et / ou **en ce que** les conducteurs ou conducteurs chauffants (30, 31) sont enroulés en une ou plusieurs couches sur la ou les couches (4a, 4b) de la couche thermique (4).

15. Dispositif pour la mise en oeuvre du procédé selon l'une des revendications 8 ou 9 à 12 ou 13 à 14, **caractérisé en ce que** le dispositif comporte au moins une tête d'extrudeuse avec un conducteur ou un dispositif d'alimentation en conducteur chauffant pour enrober les conducteurs ou conducteurs chauffants lors de l'extrusion de la couche thermique (4), dans lequel le dispositif d'alimentation de conducteur ou de conducteur chauffant a des ouvertures de sortie de conducteur ou de conducteur chauffant concentriques à une ouverture d'extrusion de la tête d'extrusion et dans lequel le conducteur ou dispositif d'alimentation de conducteur chauffant est conçu pour pouvoir tourner autour de l'ouverture d'extrusion.
